# FASCICULE DE BREVET EUROPEEN

(11) **EP 0 578 538 B1**
(45) Date de publication et mention de la délivrance du brevet: **26.08.1998**
(21) Numéro de dépôt: 93401690.8
(22) Date de dépôt: 30.06.1993
(51) Int. Cl.: F16K 31/04, F16K 11/087

(54) **Vanne à commande électrique et à boisseau distributeur totalement étanche**
Hahn mit elektrischer Steuerung und mit dichtem Abschlusskörper
Valve with electric actuator and a fluid tight obturator

(30) Priorité: 09.07.1992 FR 9208547
(43) Date de publication de la demande: 12.01.1994
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Simar, Patrick, F-27400 Pinterville (FR); Meyer, Francis, F-27940 La Mare /S Venables (FR); Pattyn, Jean-Luc, F-27950 St Marcel (FR)
(74) Mandataire: Thévenet, Jean-Bruno

(56) Documents cités:
- DE-A- 3 936 430
- FR-A- 2 577 646
- US-A- 3 206 160
- US-A- 3 347 262
- US-A- 4 327 892

## Description

### Domaine de l'invention

La présente invention concerne une vanne de régulation à commande électrique et à boisseau distributeur totalement étanche destinée à être mise en oeuvre dans des environnements hostiles ou corrosifs tels que cryotechniques, radioactifs ou bactériens et nécessitant une étanchéité totale.

### Art antérieur

On sait que dans les vannes à boisseau sphérique le transfert entre une entrée et une sortie de liquide est assuré au travers du boisseau, constitué d'une sphère pleine creusée d'un conduit et dont le déplacement est commandé par un dispositif d'entraînement manuel ou automatique.

Ainsi, le document FR-A-2 539 204 montre une vanne à deux ou trois voies dont le boisseau est manoeuvrable par un ensemble moteur-réducteur électrique dont l'arbre de sortie est accouplé au carré de commande de la vanne.

Toutefois, ce type de vanne motorisée, exemple classique de l'art antérieur, présente de nombreux inconvénients : tout d'abord, l'encombrement est élevé du fait de la présence du dispositif d'entraînement qui forme une excroissance par rapport au corps de vanne ; ensuite, dans le cas où l'on désirerait un fonctionnement sous pression élevée, il apparaîtrait des problèmes d'étanchéité dont la résolution s'avérerait particulièrement complexe et qui conduiraient à un accroissement du coût de la maintenance et du fonctionnement ; enfin, ce type de vanne s'avère manifestement inadapté au transport de fluides dangereux.

Il est connu également par les documents de brevet US-3 206 160 et DE-3 936 430 des vannes à boisseau sphériques commandées électromagnétiquement par une bobine encerclant une sphère. La sphère est elle-même un aimant qui se positionne dans la vanne en fonction du champ créé par la bobine et des efforts mécaniques et hydrauliques qui s'exercent sur elle.

### Objet et description succincte de l'invention

Un but de l'invention est de pallier les inconvénients de l'art antérieur et de réaliser une vanne à commande électrique totalement étanche à même de fonctionner dans les environnements les plus variés.

Un autre but de l'invention est de réaliser une vanne particulièrement compacte et pouvant être mise en oeuvre avec fiabilité pour des débits et pressions élevés.

Ces buts sont atteints par une vanne étanche à commande électrique comme défini dans la revendication 1.

La notable réduction de l'encombrement, tant en volume qu'en disposition, apportée par le placement de l'actionneur sur le canal distributeur ou collecteur, procure à la vanne selon l'invention une compacité exceptionnelle.

En outre, la suppression des joints dynamiques habituellement nécessaires dans ce type de vanne pour assurer un raccordement étanche entre la vanne et l'actionneur permet un accroissement important de la longévité du dispositif ainsi qu'une meilleure fiabilité.

L'actionneur comporte une chemise d'entrefer qui forme avec le corps de vanne une structure monobloc assurant le confinement du fluide.

Cette structure monobloc qui peut être réalisée à partir de techniques classiques d'emboutissage facilite la réalisation de la vanne et en simplifie son montage avec sa maintenance.

Avantageusement, le stator de l'actionneur peut aussi être immergé dans le fluide. Dans cette configuration, pour laquelle il n'existe plus de chemise d'entrefer, le fluide se trouvant confiné par le seul carter stator, il est nécessaire que le fluide soit moins agressif pour assurer un fonctionnement correct de la vanne selon l'invention.

Selon une première réalisation, la liaison entre le rotor de l'actionneur et le boisseau est réalisée au moyen d'un crabot.

Selon une seconde réalisation, le rotor de l'actionneur et le boisseau forment un élément unique.

De par la structure même de l'invention qui supprime toute poussée axiale générée par la pression du fluide sur la surface de l'arbre du boisseau, la reprise des efforts axiaux peut être réalisée par des roulements, voire même par de simples paliers lisses pour l'actionneur.

De préférence, chaque sortie de fluide est munie d'un ensemble d'étanchéité à joints rétractables ou non.

La vanne à boisseau distributeur de l'invention peut être transformée simplement en une vanne mélangeuse en inversant les voies d'entrée et de sortie du fluide, le canal de distribution constituant alors une voie de sortie et les canaux de collecte constituant des voies d'entrée.

Selon une première caractéristique particulière, la commande de l'actionneur est du type en boucle ouverte, l'actionneur pouvant alors être un simple moteur pas-à-pas.

Selon une seconde caractéristique particulière, la commande de l'actionneur est du type en boucle fermée et l'information de position alors nécessaire à ce type de commande peut être obtenue à partir d'un détecteur déterminant les différentes positions du boisseau ou bien évaluant les angles de rotation successifs de ce boisseau.

Avantageusement, afin de faciliter le dimensionnement de l'actionneur, la vanne peut comporter un réducteur immergé disposé sur le canal de distribution entre le rotor de l'actionneur et le boisseau.

### Brève description des dessins

D'autres avantages et caractéristiques de la présente invention ressortiront mieux à la lecture de la description suivante, faite à titre indicatif et non limitatif, en référence aux dessins annexés, sur lesquels:
- la figure 1 représente schématiquement un premier exemple de réalisation d'une vanne étanche selon l'invention,
- la figure 2 représente schématiquement un second exemple de réalisation d'une vanne étanche selon l'invention,
- la figure 3 représente schématiquement un troisième exemple de réalisation d'une vanne étanche selon l'invention,
- la figure 4 montre un réducteur étanche fonctionnant avec une vanne selon l'invention,
- la figure 5 est un autre exemple schématique de réalisation d'une vanne selon l'invention,
- la figure 6 est un exemple de réalisation d'une vanne selon l'invention conforme au schéma descriptif de la figure 1,
- la figure 7 est un autre exemple de réalisation d'une vanne selon l'invention dans lequel le rotor de l'actionneur et le boisseau forment une structure monobloc, et
- la figure 8 est encore un autre exemple de réalisation d'une vanne selon l'invention dans lequel l'actionneur est totalement immergé.

### Description détaillée de modes particuliers de réalisation

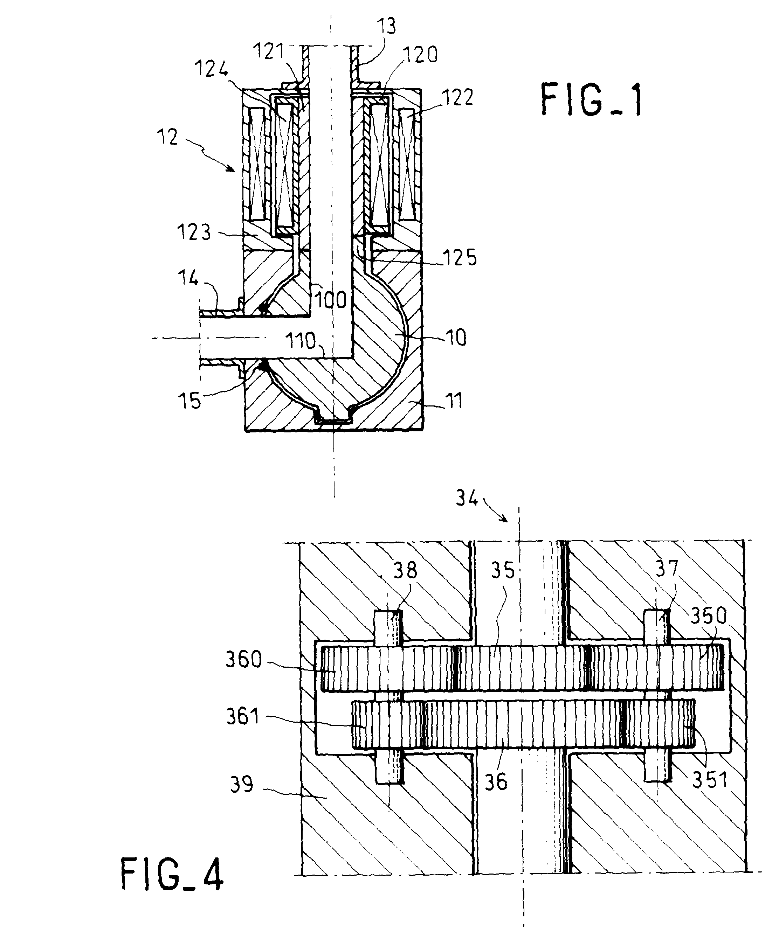

La figure 1 montre en coupe une représentation simplifiée d'une vanne étanche à commande électrique et boisseau distributeur selon l'invention.

La vanne comporte principalement un boisseau sphérique 10 disposé dans un corps de vanne 11 et un actionneur électrique 12. Des canaux de distribution 13 et de collecte 14 assurent le transfert du liquide à distribuer ou à mélanger, selon la fonction allouée à cette vanne, au travers du boisseau comme de l'actionneur.

Le boisseau sphérique 10 comporte un perçage axial 100 et un coude interne à 90° 110, et le corps de vanne 11 comprend au niveau de chaque interface de sortie fluide des ensembles d'étanchéité, par exemple un joint torique 15.

L'actionneur électrique 12 comporte d'une part un rotor 120 percé axialement et solidaire par son arbre 121 du boisseau 10 et d'autre part un stator 122 dont la carcasse ou le carter 123 est solidaire du corps de vanne 11. Le rotor qui est immergé dans le fluide comporte par exemple des aimants permanents 124, le stator pouvant alors être simplement bobiné. La liaison solidaire entre l'arbre du rotor et le boisseau peut être réalisée par un dispositif d'accouplement quelconque, par exemple à l'aide d'un crabot 125.

Le fonctionnement d'une telle vanne est particulièrement simple, le positionnement angulaire de l'ensemble rotor-boisseau étant obtenu par un envoi de courant dans les bobinages stator de l'actionneur. Il est alors possible d'orienter et de réguler le débit de fluide vers l'un quelconque des canaux de collecte ou encore d'assurer une répartition de débit entre deux sorties placées à 90°.Il est évident qu'une telle réalisation permet une grande souplesse dans la collecte comme dans la distribution des fluides. Le fonctionnement en vanne distributrice ou mélangeuse est possible en intervertissant les entrées et les sorties de fluide, les interfaces de sortie pouvant être multiples, par exemple au nombre de quatre, chacune disposée à 90°.

De même, si la vanne décrite ci-avant comporte un boisseau sphérique et un actionneur du type autosynchrone sans balais, il est évident que l'invention ne se limite pas à ces seuls boisseau et moteur particuliers mais que d'autres types de boisseau ou de moteur peuvent pareillement être mis en oeuvre. Par exemple, il peut être envisagé un stator du type à aimants permanents dont le déplacement est réalisé manuellement par un dispositif quelconque.

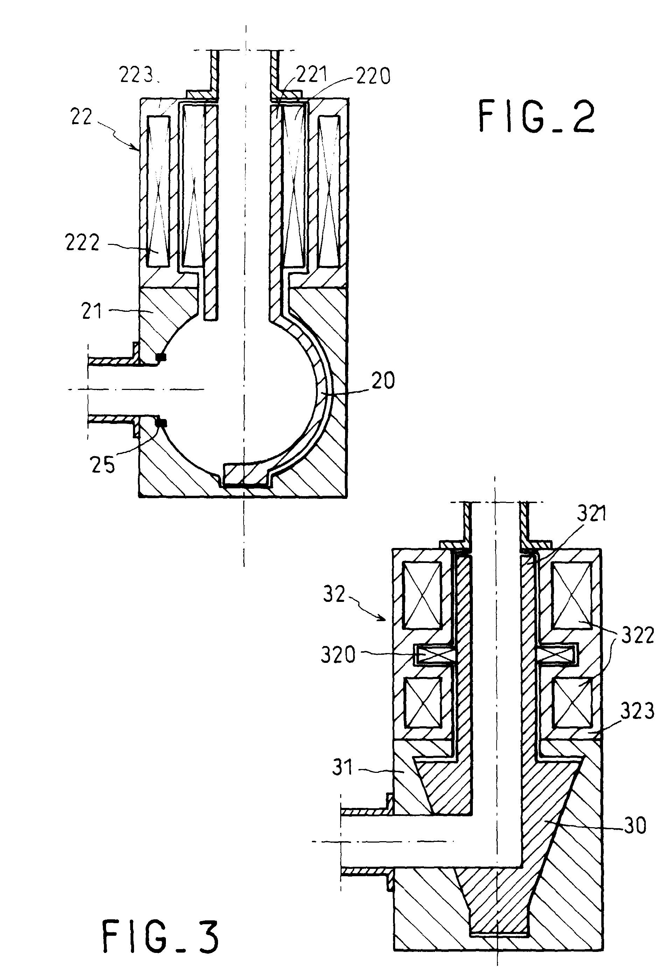

La figure 2 représente de façon simplifiée une vanne dont le boisseau est réduit à une calotte sphérique 20 et dont l'actionneur est formé par un moteur à réluctance variable 22. Cet actionneur comporte d'une part un rotor immergé à réluctance variable 220, percé axialement, et dont l'arbre 221 est solidaire de la calotte sphérique 20, et d'autre part un stator bobiné 222 encastré dans une carcasse 223 solidaire du corps de vanne 21.

La liaison entre le boisseau et le rotor est indissociable, l'axe du rotor 221 et la calotte sphérique 20 formant une pièce unique. Comme précédemment, un ensemble d'étanchéité pourra être disposé au niveau de chaque interface de sortie fluide (dans un souci de simplification, les bagues ou dispositifs analogues maintenant en place le joint 25 n'ont pas été représentés).

De même, la figure 3 montre schématiquement une vanne à boisseau conique 30 percée axialement et munie d'un coude interne à 90°, commandée par un moteur pas-à-pas 32. Cet actionneur 32 comporte d'une part un rotor discoïdal 320 monté sur un cylindre tubulaire 321 et immergé dans le fluide et d'autre part un stator bobiné 322 disposé de part et d'autre de ce disque rotorique et solidaire du corps de vanne 31. Le boisseau 30 et le cylindre tubulaire portant le rotor forment une pièce unique, l'étanchéité des interfaces de sortie fluide étant ici réalisée par le seul contact cône sur cône du boisseau avec le corps de vanne.

Les trois exemples schématiques de réalisation précédents ne sont pas les seuls possibles. Il peut être fait recours à un boisseau cylindrique et à d'autres types de moteurs comme des moteurs à balais à rotor bobiné et stator à aimants permanents ou des moteurs couples par exemple. En fait, tous types de moteurs électriques sont utilisables, le choix de l'un ou l'autre dépendant notamment du fluide véhiculé. Ainsi, dans le cas d'un rotor non bobiné à aimants permanents, on veillera à pourvoir ces derniers d'une protection suffisante pour éviter leur oxydation.

Si le fluide le permet, c'est-à-dire s'il n'est pas corrosif, le stator peut être également immergé, et le confinement du fluide, assuré préalablement par une chemise d'entrefer placée entre le stator et le rotor, est alors réalisé directement par le carter stator. Dans ces deux cas, rotor seul immergé ou rotor et stator immergés, la vanne selon l'invention pourra supporter des pressions élevées, le liquide étant confiné soit par la carcasse statorique solidaire du bâti de la machine incorporant la vanne, soit par la chemise d'entrefer pour laquelle le stator se comporte alors comme une frette.

On veillera tout particulièrement au choix des différents matériaux mis en oeuvre quant à leurs aspects magnétique et mécanique. En outre, dans le cas de distribution de fluides alimentaires, les matériaux utilisés devront répondre aux normes en vigueur en matière d'hygiène et de sécurité.

En ambiance cryotechnique, on privilégiera le recours à des matériaux compatibles avec l'ambiance de travail, notamment du point de vue thermique et vibratoire, la fonction électromagnétique et le fluide véhiculé, les très basses températures ayant pour effet de diminuer la résistivité des bobinages, de réduire la puissance électrique nécessaire et d'accroître la fiabilité de l'ensemble. Notons qu'un fonctionnement supraconducteur est aussi envisageable.

Dans de nombreuses applications, la commande du déplacement en rotation du boisseau sera réalisée directement par l'actionneur. Toutefois, pour certaines applications spécifiques dans lesquelles un couple important serait nécessaire pour actionner ce boisseau, il pourra être intéressant de placer un réducteur immergé entre l'actionneur et le boisseau.

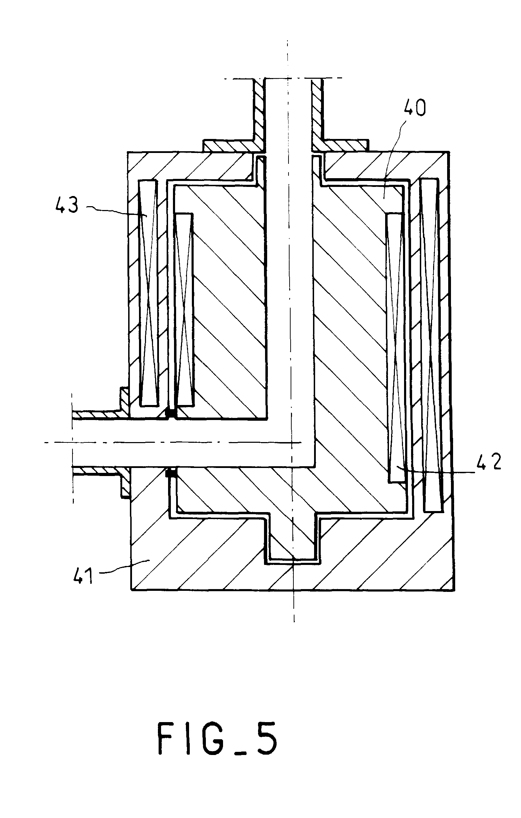

La figure 4 montre un tel réducteur 34 comprenant une première roue dentée 35 solidaire de l'axe du rotor et une seconde roue dentée 36 solidaire du boisseau. Chacune de ces deux roues est en prise avec deux pignons dentés 350, 351 ; 360, 361 disposés de façon diamétralement opposée, les axes de rotation 37, 38 des pignons situés d'un même côté étant communs. Avec une telle structure, le rapport de réduction, fonction du rapport des diamètres des différentes roues et pignons, peut être évalué simplement.

Le corps du réducteur 39, dans lequel reposent les axes de rotation 37, 38 des pignons dentés 350, 360 ; 351, 361, est relié d'une part à la carcasse statorique 123, 223, 323 de l'actionneur et d'autre part au corps de vanne 11, 21, 31. Il peut être noté que, pour faciliter le contrôle du couplage entre l'actionneur et le boisseau, il est tout à fait possible d'utiliser des embrayages ou des freins. Le couplage réalisé sera alors du type continu ou du type tout ou rien selon la nature du dispositif employé.

La figure 5 est un autre exemple schématique de réalisation d'une vanne selon l'invention dans lequel le corps de vanne et la carcasse statorique forment un même corps 41, le boisseau 40 présentant une structure cylindrique intégrant le rotor 42 de l'actionneur. Le boisseau est percé axialement et est muni d'un coude interne à 90°. Il doit être noté que cet angle est donné à titre indicatif et préférentiel, mais d'autres angles d'entrée/sortie peuvent parfaitement être choisis.

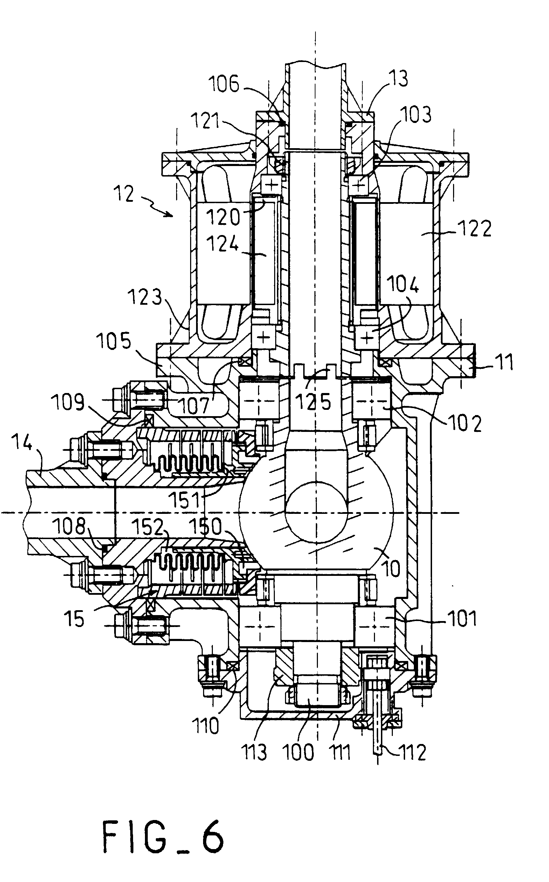

La figure 6 est un premier exemple de réalisation d'une vanne selon l'invention mise en oeuvre conformément aux principes définis en regard de la figure 1. Les éléments identiques portent les mêmes références. On retrouve le boisseau sphérique 10 dont l'arbre 100 est accouplé par un crabot 125 à l'arbre 121 du rotor 120 à aimants permanents 124. L'arbre du boisseau est libre en rotation par rapport au corps de vanne 11 par l'intermédiaire de deux paliers à roulements 101, 102 et l'arbre du rotor tourne librement dans la chemise d'entrefer formant également la carcasse statorique 123, grâce aux paliers lisses 103, 104.

L'utilisation de paliers lisses au niveau de l'actionneur est justifiée par les faibles charges que subissent ces paliers, l'essentiel des efforts mis en jeu étant supporté par les paliers de roulements du boisseau, qui, par exemple, peuvent être du type à gorge profonde.

Toutefois, il peut être noté que la reprise des efforts axiaux réalisée par ces paliers peut être répartie différemment.

La liaison carcasse statorique-corps de vanne est réalisée par des vis de fixation 105 non représentées. Les ensembles d'étanchéité 15 disposés au niveau des interfaces de sortie fluide sont des dispositifs rétractables comportant un joint 150 supporté par un porte-joint 151, le contact du joint avec le boisseau étant maintenu à l'aide d'un ensemble élastique 152 reposant d'une part sur le corps de vanne et d'autre part sur le porte-joint.

Des joints toriques 106, 107, 108 d'étanchéité statique sont placés respectivement entre le canal de distribution (d'arrivée) de fluide 13 et la carcasse statorique 123, entre la carcasse statorique 123 et le corps de vanne 11 et entre le corps de vanne 11 et le canal de collecte (de sortie) de fluide 14. Pour des raisons de réalisation pratique, le corps de vanne 11 est réalisé en plusieurs parties nécessitant alors l'adjonction de joints d'étanchéité supplémentaires 109 et 110. Notamment, l'extrémité libre de l'arbre 100 du boisseau peut être accessible en retirant un couvercle 111 fixé au corps de vanne et comportant un dispositif de mesure de la position angulaire du boisseau 112 destiné à coopérer avec une bague 113 solidaire de l'arbre 100 de ce boisseau. Cette mesure peut être réalisée par un capteur à réluctance variable ou à fibre optique ou d'un tout autre type. Cette localisation du capteur en bout d'arbre de boisseau n'est pas obligatoire et celui-ci peut parfaitement être positionné à l'extrémité libre de l'arbre du rotor 121 ou bien encore à la jonction des deux arbres. De même, il peut être totalement immergé ou placé simplement à sec. Dans ce cas, une sortie d'arbre de faible diamètre sera alors nécessaire. Sa présence même n'est pas toujours obligatoire et dépend essentiellement du type de commande délivrée à l'actionneur.

Ainsi, dans le cas d'une commande de l'actionneur en boucle ouverte, par exemple si cet actionneur est un moteur pas-à-pas, la détection de la position du boisseau n'est pas nécessaire. Il en est de même en cas d'activation manuelle du stator. Au contraire, si la commande de l'actionneur est réalisée en boucle fermée, il est indispensable de disposer d'une information sur la position de ce boisseau. Celle-ci peut alors provenir d'un capteur indiquant différentes positions déterminées prises par le boisseau ou bien d'un système de mesure plus élaboré donnant l'angle de rotation du boisseau.

La structure de la vanne selon l'invention, telle que décrite précédemment, est remarquable en ce qu'elle permet une réduction d'encombrement appréciable notamment par le fait que, au contraire d'un actionneur classique tel que celui décrit dans le document FR-A-2 539 204 précité, qui commande le boisseau du côté opposé au canal distributeur, l'actionneur de l'invention se trouve du côté de la tuyauterie de raccordement par laquelle un passage doit nécessairement être pratiqué. Il y a seulement lieu de noter un léger accroissement du diamètre sur une faible longueur.

Mais surtout, en supprimant tout problème d'étanchéité dynamique, l'actionneur selon l'invention permet une longévité et une fiabilité accrues ainsi qu'une maintenance réduite. En effet, la suppression de tous joints dynamiques a pour conséquence d'éviter toute consommation de couple au niveau de ce joint.

Il est en outre essentiel de noter que la suppression de l'étanchéité d'arbre classique provoque une suppression de la poussée axiale usuellement générée par la pression du fluide sur la surface de cet arbre. Or, cette poussée peut être très importante. Ainsi, pour un diamètre interne d'arbre du boisseau de 30 mm avec un débit de 4 kg/s d'hydrogène liquide sous 200 bars de pression, on atteint une poussée de près de 10 490 N, valeur qu'il faut comparer à l'effort axial généré par le changement de direction de l'écoulement du fluide qui peut être évalué à 310 N.

On constate donc d'une part pour un dispositif classique avec joint d'arbre dynamique un effort axial total de 10 800 N et d'autre part pour un dispositif conforme à l'invention un effort axial total réduit à 310 N, soit seulement environ 3 % du précédent.

Il en résulte une notable simplification du système de reprise des efforts axiaux qui, comme cela a été indiqué plus haut, peut se limiter à de simples paliers sans butées. A l'extrême, du fait de l'absence de perte de charge ou en tous cas de pertes très faibles, liée à l'utilisation d'une vanne à boisseau et à l'écoulement axial, sans changement de courbure, au niveau de l'actionneur, il peut être envisagé pour cet actionneur un fonctionnement sans roulements, mais à entrefer mécanique faible, de l'ordre de 1 à 4 dixièmes de millimètre.

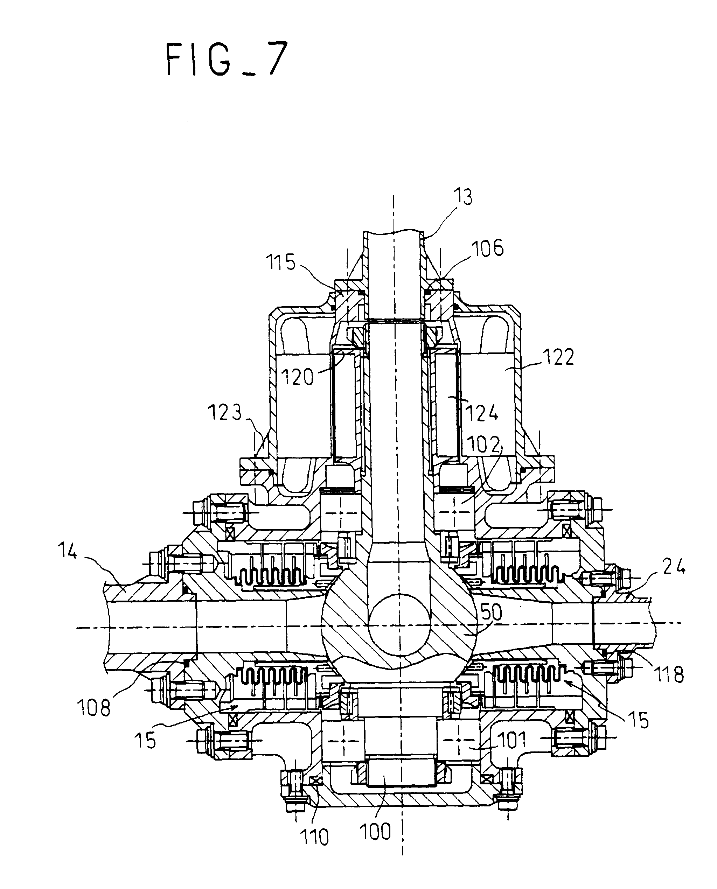

La figure 7 montre un tel exemple de réalisation dans lequel l'arbre de rotor et le boisseau forment une pièce unique 50 maintenue par les seuls roulements 101 et 102. On peut remarquer que, dans cette réalisation, la carcasse statorique 123 est séparée de la chemise d'entrefer qui forme avec le corps de vanne une structure monobloc 115, laquelle peut avantageusement être réalisée en tôle légère emboutie. Toutefois, il est aussi possible de rapporter cette chemise sur le corps par soudure. Les autres éléments, identiques à ceux précédemment décrits, ne seront pas à nouveau explicités. On remarquera seulement que la vanne représentée est une vanne à trois voies (une entrée, deux sorties) et que chaque voie est munie d'un ensemble d'étanchéité 15. Comme précédemment, un joint torique statique 118 est disposé entre le corps monobloc 115 et le second canal de collecte 24.

Cette réalisation, comme la précédente, de par la présence du boisseau, autorise des débits et des pressions élevés de l'ordre de 200 bar et plus, et assure, même à ces pressions, une étanchéité très performante, les roulements robustes 101 et 102 reprenant sans difficulté les efforts générés par la pression du fluide en position fermée.

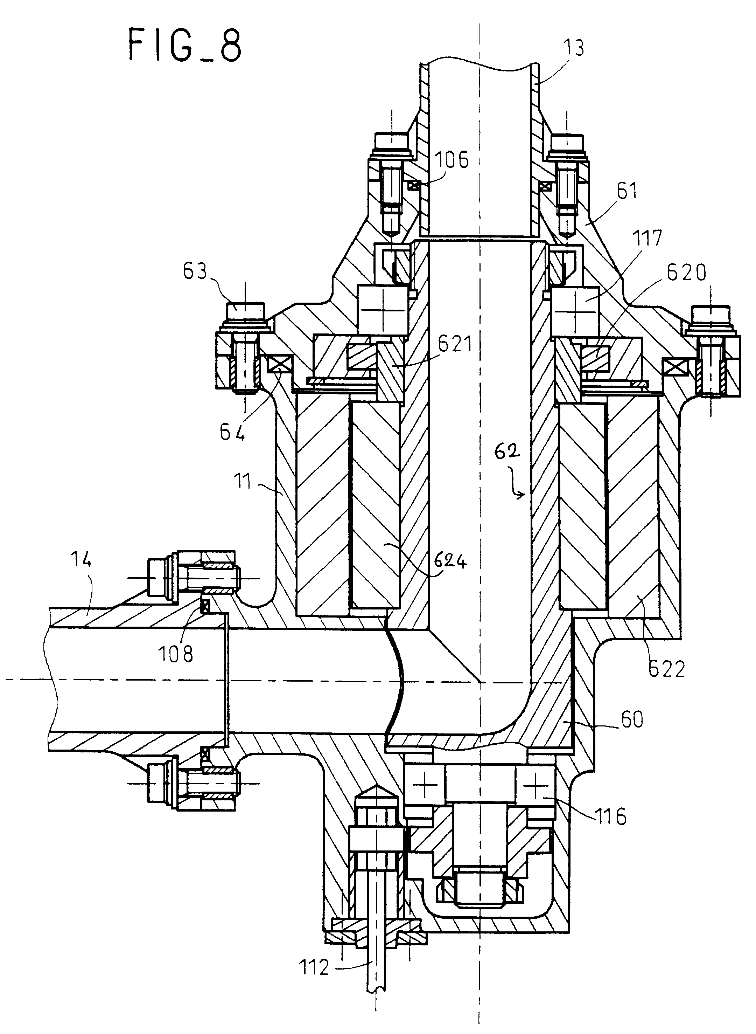

La figure 8 est un troisième exemple de réalisation d'une vanne étanche à commande électrique et à boisseau distributeur selon l'invention, dans lequel le rotor et le stator sont tous deux immergés. En outre, l'arbre du rotor et le boisseau de forme cylindrique forment une pièce unique 60 supportée par des roulements 116, 117 placés à chaque extrémité de cette pièce.

L'actionneur totalement immergé 62 est du type moteur à balais avec un rotor bobiné 624 et un stator à aimants permanents 622. On peut voir sur la figure 8 les balais 620 qui viennent frotter sur le collecteur 621.

Pour faciliter le montage du moteur, le corps de vanne qui englobe aussi l'actionneur est réalisé en deux parties 11, 61 reliées par des éléments de fixation 63, l'étanchéité statique étant assurée par un joint torique 64.

Des joints toriques 106 et 108 assurent respectivement l'étanchéité statique entre le canal de distribution 13 et la partie haute du corps de vanne 61 et entre la partie basse du corps de vanne 11 et le canal de collecte 14.

## Revendications

1. Vanne étanche à commande électrique comportant
- un corps de vanne (11, 21, 31, 41) muni d'un canal de distribution (13) de fluide et d'au moins un canal de collecte (14, 24) de ce fluide,
- un boisseau distributeur (10, 20, 30, 40, 50, 60) placé à l'intérieur de ce corps de vanne pour transférer le fluide entre le canal de distribution et le au moins un canal de collecte, et
- un actionneur électrique (12, 22, 32, 42, 62) composé d'un stator (122, 222, 322, 622) et d'un rotor (120, 220, 320, 624) pour entraîner en rotation le boisseau distributeur,
caractérisée en ce que :
- cet actionneur électrique est disposé entre le canal de distribution et le boisseau distributeur,
- le rotor de l'actionneur électrique est solidaire avec le boisseau distributeur, le rotor étant percé axialement pour permettre un écoulement de fluide sans perte de charge au travers de ce boisseau depuis le canal de distribution et étant libre en rotation dans le corps de vanne par l'intermédaire de paliers lisses ou à roulement (101, 102, 103, 104, 116, 117); et
- le stator de l'actionneur est raccordé avec le corps de vanne de façon étanche sans utilisation de dispositifs d'étanchéité dynamique.

2. Vanne étanche selon la revendication 1, caractérisée en ce que ledit actionneur comporte une chemise d'entrefer disposée entre le rotor (120) et le stator (122) qui forme avec le corps de vanne une structure monobloc (115) assurant le confinement du fluide.

3. Vanne étanche selon la revendication 1 ou la revendication 2, caractérisée en ce que ledit actionneur est du type à aimants permanents, le rotor (120) étant mobile sous l'action d'un stator à activation manuelle.

4. Vanne étanche selon la revendication 1, caractérisée en ce que le stator est également immergé dans le fluide, le confinement du fluide étant alors assuré directement par le carter (11,61) de ce stator (622).

5. Vanne étanche selon l'une quelconque des revendications 1 à 4, caractérisée en ce que la liaison mécanique entre le rotor de l'actionneur et le boisseau distributeur est réalisée au moyen d'un crabot (125).

6. Vanne étanche selon l'une quelconque des revendications 1 à 4, caractérisée en ce que le rotor de l'actionneur et le boisseau distributeur forment un élément unique (50, 60).

7. Vanne étanche selon l'une quelconque des revendications 1 à 6, caractérisée en ce qu'elle comporte en outre un réducteur étanche (34) disposé sur le canal de distribution entre le rotor de l'actionneur et le boisseau distributeur.

8. Vanne étanche selon l'une quelconque des revendications 1 à 7, caractérisée en ce que ledit boisseau comporte un coude interne avantageusement à 90°.

9. Vanne étanche selon l'une quelconque des revendications 1 à 8, caractérisée en ce que le corps de vanne est muni au niveau de chaque canal de collecte d'un ensemble d'étanchéité (15) disposé entre ce canal et le boisseau.

10. Vanne étanche selon l'une quelconque des revendications 1 à 9, caractérisée en ce que le canal de distribution (13) constitue une voie de sortie du fluide et en ce que les canaux de collecte (14) constituent des voies d'entrée du fluide, formant ainsi une vanne mélangeuse.

11. Vanne étanche selon l'une quelconque des revendications 1 à 10, caractérisée en ce que la commande de l'actionneur est du type en boucle ouverte.

12. Vanne étanche selon la revendication 11, caractérisée en ce que l'actionneur est constitué par un moteur pas-à-pas (32).

13. Vanne étanche selon l'une quelconque des revendications 1 à 10, caractérisée en ce que la commande de l'actionneur est du type en boucle fermée.

14. Vanne étanche selon la revendication 13, caractérisée en ce qu'elle comporte en outre un détecteur de certaines positions angulaires prédéterminées du boisseau (112).

15. Vanne étanche selon la revendication 13, caractérisée en ce qu'elle comporte en outre un dispositif de mesure de l'angle de rotation du boisseau.

16. Vanne étanche selon l'une quelconque des revendications 1 à 15, caractérisée en ce qu'elle est apte à évoluer dans un environnement sévère, par exemple cryotechnique.

## Patentansprüche

1. Elektrisch gesteuertes, dichtes Ventil mit
- einem Ventilkörper (11, 21, 31, 41), der mit einer Fluidverteilungsleitung (13) und mindestens einer Sammelleitung (14, 24) für dieses Fluid versehen ist,
- einem Verteilungsküken (10, 20, 30, 40, 50, 60), das im Innern dieses Ventilkörpers vorgesehen ist, um das Fluid zwischen der Verteilungsleitung und der mindestens einen Sammelleitung zu befördern, und
- einem elektrischen Antriebsgerät (12, 22, 32, 42, 62), das sich aus einem Stator (122, 222, 322, 622) und einem Rotor (120, 220, 320, 624) zusammensetzt, für den Drehantrieb des Verteilungskükens,
dadurch gekennzeichnet, daß
- dieses elektrische Antriebsgerät zwischen der Verteilungsleitung und dem Verteilungsküken vorgesehen ist,
- der Rotor des elektrischen Antriebsgeräts fest verbunden ist mit dem Verteilungsküken, wobei der Rotor eine axiale Bohrung aufweist, um ein Strömen von Fluid von der Verteilungsleitung aus durch dieses Küken hindurch ohne Druckverlust zu ermöglichen, und in dem Ventilkörper mit Hilfe von Gleit- oder Kugellagern (101, 102, 103, 104, 116, 117) frei drehen kann; und
- der Stator des Antriebsgeräts ohne Einsatz dynamischer Dichtungen dicht abschließend mit dem Ventilkörper verbunden ist.

2. Dichtes Ventil nach Anspruch 1, dadurch gekennzeichnet, daß das Antriebsgerät einen Luftspaltmantel aufweist, der zwischen dem Rotor (120) und dem Stator (122) angeordnet ist und eine einstückige Einheit (115) mit dem Ventilkörper bildet, die den Einschluß des Fluids sicherstellt.

3. Dichtes Ventil nach Anspruch 1 oder 2, dadurch gekennzeichnet, daß das Antriebsgerät nach Art eines Dauermagneten vorgesehen ist, wobei der Rotor (120) durch Einwirkung eines manuell betätigten Stators beweglich ist.

4. Dichtes Ventil nach Anspruch 1, dadurch gekennzeichnet, daß der Stator ebenfalls in das Fluid getaucht ist, so daß der Einschluß des Fluids direkt durch das Gehäuse (11, 61) dieses Stators (622) sichergestellt ist.

5. Dichtes Ventil nach einem der Ansprüche 1 bis 4, dadurch gekennzeichnet, daß die mechanische Verbindung zwischen dem Rotor des Antriebsgeräts und dem Verteilungsküken mittels einer Klaue (125) hergestellt wird.

6. Dichtes Ventil nach einem der Ansprüche 1 bis 4, dadurch gekennzeichnet, daß der Rotor des Antriebsgeräts und das Verteilungsküken ein einziges Element (50, 60) bilden.

7. Dichtes Ventil nach einem der Ansprüche 1 bis 6, dadurch gekennzeichnet, daß es ferner ein dichtes Untersetzungsgetriebe (34) umfaßt, das an der Verteilungsleitung zwischen dem Rotor des Antriebsgeräts und dem Verteilungsküken vorgesehen ist.

8. Dichtes Ventil nach einem der Ansprüche 1 bis 7, dadurch gekennzeichnet, daß das Küken einen inneren Winkel aufweist, der günstigerweise 90° beträgt.

9. Dichtes Ventil nach einem der Ansprüche 1 bis 8, dadurch gekennzeichnet, daß der Ventilkörper an jeder Sammelleitung eine zwischen diesem Kanal und dem Küken angeordnete Dichtung (15) aufweist.

10. Dichtes Ventil nach einem der Ansprüche 1 bis 9, dadurch gekennzeichnet, daß die Verteilungsleitung (13) einen Austrittsweg für das Fluid bildet und daß die Sammelleitungen (14) Einlaßwege für das Fluid bilden und so ein Mischventil bilden.

11. Dichtes Ventil nach einem der Ansprüche 1 bis 10, dadurch gekennzeichnet, daß die Steuerung des Antriebsgeräts eine Steuerung nach Art eines offenen Regelkreises ist.

12. Dichtes Ventil nach Anspruch 11, dadurch gekennzeichnet, daß das Antriebsgerät ein Schrittmotor (32) ist.

13. Dichtes Ventil nach einem der Ansprüche 1 bis 10, dadurch gekennzeichnet, daß die Steuerung des Antriebsgeräts eine Steuerung nach Art eines geschlossenen Regelkreises ist.

14. Dichtes Ventil nach Anspruch 13, dadurch gekennzeichnet, daß es ferner eine Abfragevorrichtung für bestimmte vorbestimmte Winkelpositionen des Kükens (112) umfaßt.

15. Dichtes Ventil nach Anspruch 13, dadurch gekennzeichnet, daß es ferner eine Meßvorrichtung für den Drehwinkel des Kükens umfaßt.

16. Dichtes Ventil nach einem der Ansprüche 1 bis 15, dadurch gekennzeichnet, daß es für den Einsatz in aggressiver Umgebung, beispielsweise einer Tieftemperaturumgebung, geeignet ist.

## Claims

1. An electrically controlled leakproof valve comprising
- a valve body (11, 21, 31, 41) provided with a fluid feed channel (13) and at least one delivery channel (14, 24) for said fluid,
- a distributor plug (10, 20, 30, 40, 50, 60) placed inside said valve body so as to transfer the fluid between the feed channel and at least one delivery channel, and
- an electrical actuator (12, 22, 32, 42, 62) consisting of a stator (122, 222, 322, 622) and of a rotor (120, 220, 320, 624) so as to drive the distributor plug in rotation,
characterised in that:
- said electrical actuator is disposed between the feed channel and the distributor plug,
- the rotor of the electrical actuator is united with the distributor plug, the rotor being axially pierced so as to allow the fluid to flow without headloss through said plug from the feed channel and being free to rotate in the valve body via smooth or ball bearings (101, 102, 103, 104,116, 117); and
- the actuator stator is connected to the valve body in sealed manner without using dynamic sealing devices.

2. A leakproof valve according to claim 1, characterised in that said actuator includes, between the rotor (120) and the stator (122), a magnetic gap occupied by a jacket which co-operates with the valve body to form a one-piece structure (115) that confines the fluid.

3. A leakproof valve according to claim 1 or claim 2, characterised in that said actuator is of the permanent magnet type, the rotor (120) being movable under drive from a manually actuated stator.

4. A leakproof valve according to claim 1, characterised in that the stator is also immersed in the fluid, fluid confinement then being provided directly by the casing (11, 61) of the stator (622).

5. A leakproof valve according to any one of claims 1 to 4, characterised in that the mechanical connection between the actuator rotor and the distributor plug is provided by means of a claw coupling (125).

6. A leakproof valve according to any one of claims 1 to 4, characterised in that the actuator rotor and the distributor plug form a single element (50, 60).

7. A leakproof valve according to any one of claims 1 to 6, characterised in that it further includes a sealed stepdown gear unit (34) disposed on the feed channel between the actuator rotor and the distributor plug.

8. A leakproof valve according to any one of claims 1 to 7, characterised in that said plug advantageously comprises an intemal 90° bend.

9. A leakproof valve according to any one of claims 1 to 8, characterised in that, at each delivery channel, the valve body is provided with a sealing assembly (15) disposed between said channel and the plug.

10. A leakproof valve according to any one of claims 1 to 9, characterised in that the feed channel (13) constitutes an outlet port for the fluid and in that the delivery channel (14) constitutes a plurality of inlet ports for the fluid, thereby providing a mixer valve.

11. A leakproof valve according to any one of claims 1 to 10, characterised in that the actuator is under open loop type control.

12. A leakproof valve according to claim 11, characterised in that the actuator is constituted by a stepper motor (32).

13. A leakproof valve according to any one of claims 1 to 10, characterised in that the actuator is under closed loop type control.

14. A leakproof valve according to claim 13, characterised in that it further includes a detector (112) for detecting certain predetermined angular positions of the plug.

15. A leakproof valve according to claim 13, characterised in that it further includes a device for measuring the angle of rotation of the plug.

16. A leakproof valve according to any one of claims 1 to 15, characterised in that it is suitable for use in a severe environment, for example a cryogenic environment.
